# EUROPEAN PATENT APPLICATION

(11) **EP 1 378 431 A1**
(43) Date of publication of application: **07.01.2004**
(21) Application number: 03075411.3
(22) Date of filing: 11.02.2003
(51) Int. Cl.: B62K 15/00, B62K 13/00, B62B 3/02, B62J 7/04

(54) **Bicycle convertible into a shopping trolley**

(30) Priority: 03.04.2002 GB 0207688
(71) Applicant: Bush, Edmund Helmuth, Winchester, SD21 2NS (GB)
(72) Inventor: Bush, Edmund Helmuth, Winchester, SD21 2NS (GB)

(57) **Abstract**

A bicycle incorporates a frame in three parts (1,2,3) which are hinged together to permit the wheels to be locked either in line for the cycling mode, or in parallel for the shopping trolley mode, as shown in plan view in Figs. 2 and 3. The bicycle is provided with a shopping container (4) which is supported on slide rails (5) and can be locked in positions suitable for each mode and incorporates a push bar (4A) to permit the bicycle to be pushed in the direction normally effected by pedalling. One or two castor wheels (6) are provided under the central frame (3) for support in the trolley mode. In a further version another hinge is provided to permit the trolley to be folded for transport. In a further version provision is made to incorporate an electric motor-assisted drive unit.

## Description

This invention relates to bicycles equipped with a shopping container for the transport of goods which can be converted into a shopping trolley, and in particular a shopping trolley suitable for use in shops and supermarkets.

Folding bicycles are well know, including ones with one or two additional castor wheels permitting the bicycles to be used as a shopping trolleys in the folded condition, when they are pushed along in a direction opposite to the normal cycling mode using the existing handlebars. This has the disadvantages that a 'neutral' gear is required in the drive gear since this motion would otherwise entail a rotation of the pedals which would then foul the folded bicycle frame, and that the handlebars and saddle hinder access of the shopping container by the user.

A specific embodiment of the invention to overcome these isadvantages will now be described by way of example with reference to the accompanying drawing in which :-
Figure 1 shows a side view of the bicycle;
Figure 2 shows a plan view of the bicycle;
Figure 3 shows a plan view of the bicycle in the trolley mode.
Figure 4 shows a side view of the bicycle in the trolley mode.
Figure 5 shows details of the front support member of the container and means of locking the container in two positions.
Figure 6 shows a means of locking the front wheel in position relative to the front frame member in the trolley mode.
Fig 7 shows another means of locking the front wheel in position relative to the front member in the trolley mode
Figure 8 shows a means of hinging and locking the front frame member in position relative to the central frame member
Figure 9 shows a means of folding the bicycle for transport.
Figure 10 shows a motor-assisted version of the bicycle convertible into a trolley.

### Referring to the drawings:

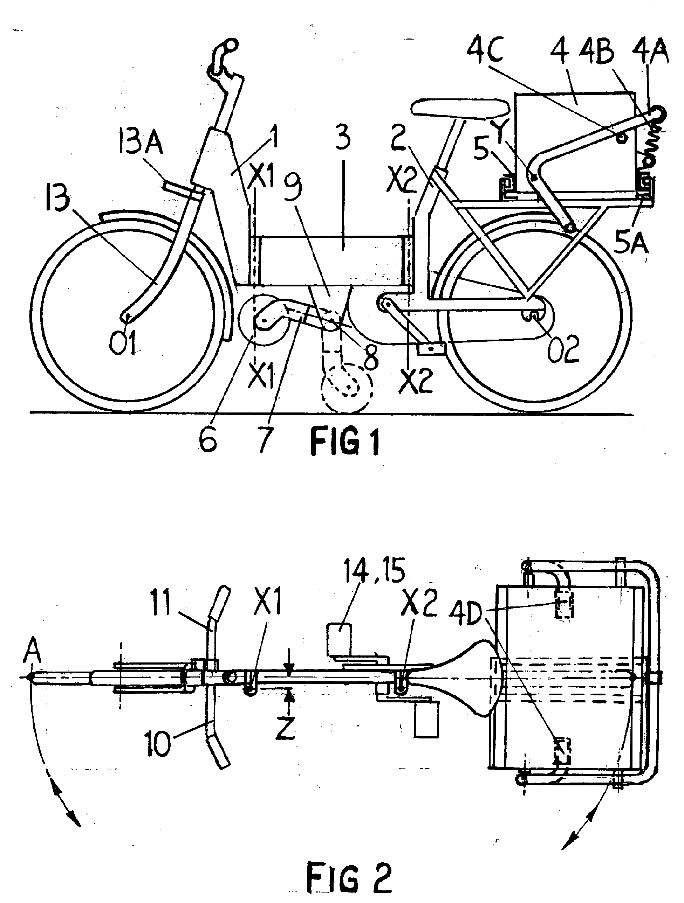

In Fig.1 the front frame member 1 and the rear frame member 2 are connected to central frame member 3 by means of hinged joints incorporating hinge pins or screws along vertical axis lines X1-X1 and X2-X2 equi-distant from front and rear wheel centres O1 and O2 respectively, the rear hinge being situated above the part of the rear frame member carrying the bearing for the pedal cranks, and are locked in their positions by means not shown. A shopping container 4 is supported on transverse slide rails 5 attached to support frames 5A which project on the chaindrive side no further than the rear frame member and on the opposite side no further than one half of the total width of the container 4, and incorporate hinges on that side (not shown) permitting them to be folded down when not required. A push-bar 4A is pivotted at points 'Y' on each side of the container 4, and spring-loaded by means of centrally situated spring 4B against stop lugs 4C. A nosepiece 13A attached to the bicycle front wheel fork 13 engages a spring-loaded forked latch (not shown) mounted either on the container or on the front frame member which can be manually engaged with the nosepiece to lock the front wheel fork in line with the front frame member in the trolley mode. A castor wheel 6 mounted on swivel arm 7 is hinged at bearing 8 in bracket 9 attached to central frame member 3, and can be moved to the lower position for trolley mode and locked in either position by means not shown.

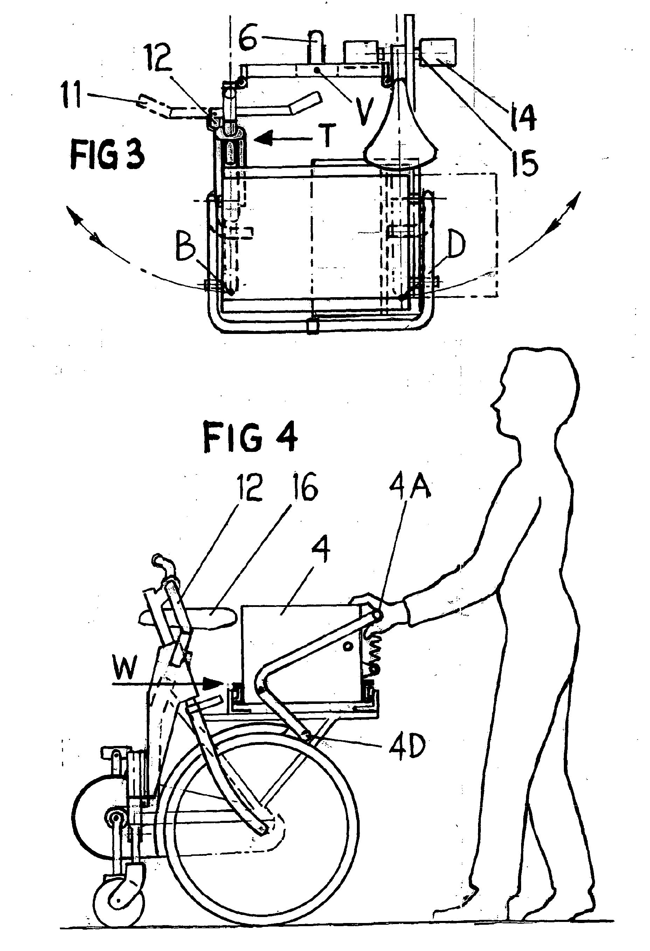

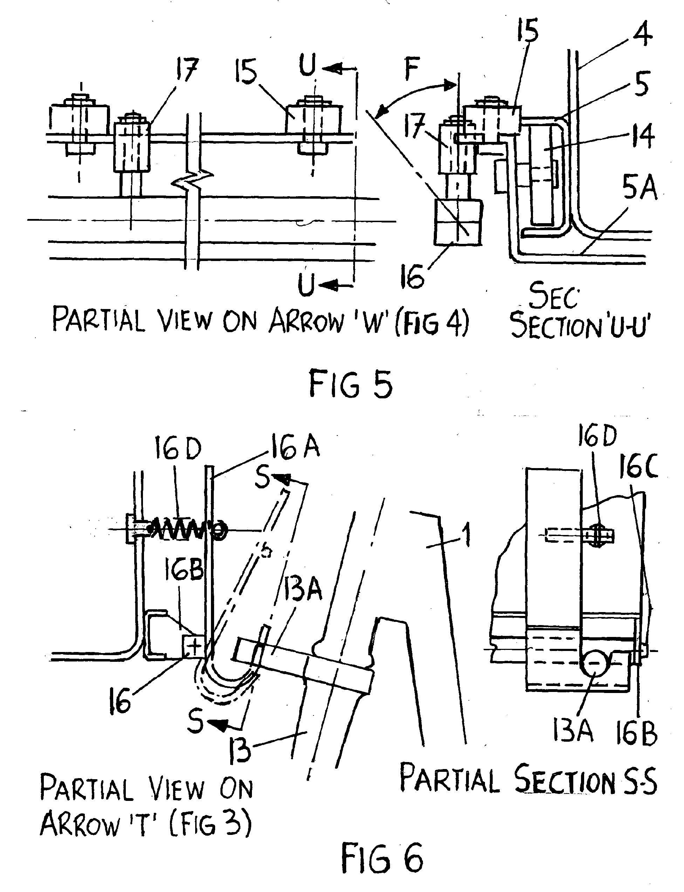

Fig. 2 shows the shopping container locked in the 'cycling' mode by means not shown. The turned-in ends of the push-bar 4 are equipped with brake-pads 4D (shown chain-dotted). To initiate the conversion from the cycling to the trolley mode, the hinges X1 and X2 are unlocked and the front and rear frames are moved such that points A and C end up in positions B and D respectively as shown in Fig 3. The hinge points X1 and X2 are off-set from the centre line of the wheels by an amount Z, which permits the hinges to open up when positioning the frame members in the trolley mode.

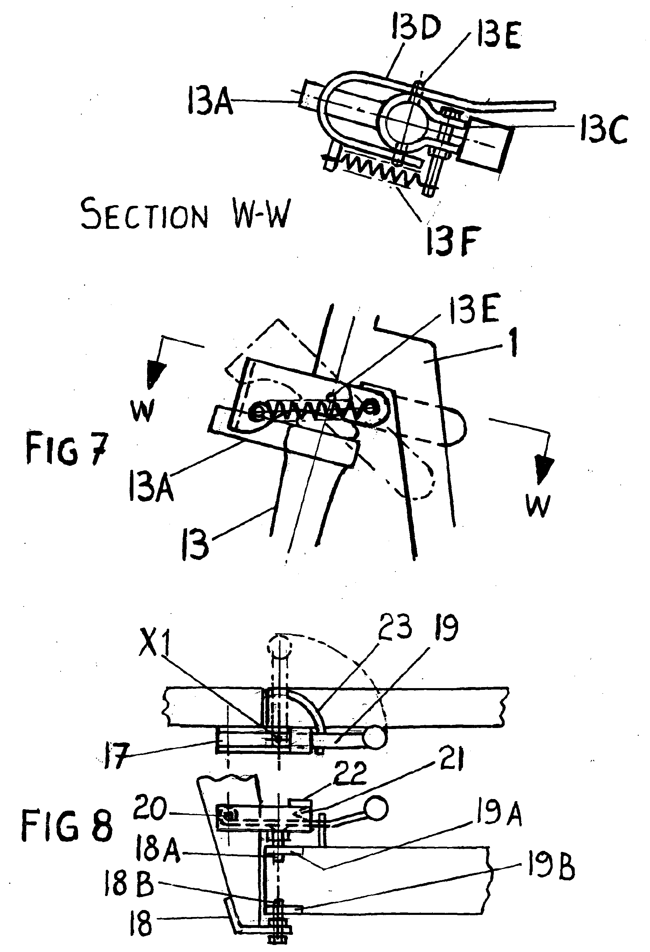

Fig. 3. shows a plan view of the bicycle in the shopping mode. The arcuate movement of the front and rear frames is complete and the frames are locked in this position. At the same time the container 4 is unlocked and moved along its supporting slide rails 5 whilst lifting push-bar 4A to permit brake pads 4D to ride over the tyres, into a position central between the wheels and locked by means not shown. The front wheel fork 13 can now be locked in line with the front frame by means shown in Figs 6 or 7. The castor wheel 6 is shown in its lower position supporting the rear part of the trolley, and is free to swivel about vertical axis V. The right-hand handlebar 11 is shown chain-dotted and as item 12 in its folded-down position. The right-hand pedal 14 may be folded and locked with the crank 15 in the vertical position by means not shown in order to take up less space. If the driving gear has a neutral position, this may be engaged to facilitate manoeuvres where the rear wheel is moved backwards.

Fig. 4 shows a side view of the trolley in operation, with the operator pushing the trolley using push-bar 4A, thus lifting brake pads 4D off the tyres. The saddle 16 is clear of the container 4, and right-hand handle bar 12 is shown folded down.

Fig 5 shows a partial view along Arrow W on Fig 4 with details of the front slide rail 5, which is fastened to the shopping container 4 by means not shown, and supported on rollers 14 rotatably mounted off front support frame 5A which also carries locating rollers 15 to provide sideways guidance to the shopping container 4. A bar 16 supported off the slide rail 5 by means not shown and enabled to swing on its axis through angle 'F' carries a locking pin or roller 17 which due to spring loading of the bar 16 engages a notch in support member 5A at each end of the travel of the container, and may be moved to said positions by manually rotating the bar using a lever attached to it not shown.

Fig 6 shows another partial view along arrow W in Fig 4 at the end of the shopping container overhanging the front wheel, with a means of locking the front wheel fork in line with the front frame member. A forked locking lever 16A is mounted on bar 16 already used in the mechanism described in Fig 5, which is now shown pivotably supported in bracket 16B by means of pivot screw 16C, and is spring-loaded against the side of the shopping container by means of spring 16D, its resting position being determined by the locking pin or roller 17 described in Fig 5 above. In this position the nose piece 13A is located in the fork in line with the front frame member 1. Movement of the forked locking lever clockwise releases the nose piece and also permits the shopping container to be moved into the cycling mode.

Fig 7 shows another means of locking the front wheel fork 13 in line with the front frame member 1. A clamp ring 13C carries a forked locating visor 13D pivotted on pins 13E and spring-loaded by toggle spring 13F such as to engage and lock the nose-piece 13A as shown. To disengage the forked visor it is moved into the position shown chain-dotted by pressing on its extension beyond the pivot pins.

Fig 8 shows a view of the front end of the central frame member around the hinge point X1. A channel 17 is rigidly attached to the front frame member 1 with a top front hinge screw 18A bolted to it, with its free thread removed to form a bearing pin to engage with a hole in the top bearing lug 19A attached to the central frame member. A bottom bearing bracket 18 rigidly attached to the front frame member has a bottom front hinge screw 18B bolted to it, which engages a hole in the bottom lug 19B in a similar manner. A locking lever 19 is a close sliding fit inside channel 17 and can be moved around a pin 20 against a spring 21 (shown dotted) bearing against a strap 22 bridging the top of the channel. A locating ring 23 affixed to the top of the central frame member has two notches at right angles, thus permitting the looking lever to be located either parallel with the centre line of the central frame member or at right angles to it. Packing washers not shown may be placed between the nuts securing the hinge screws and the central frame member to restrict any play. Alternatively, one or both of the lugs may be provided with tapped holes to engage hinge screws not provided with bearing pins at their ends.

The arrangement around the rear hinge point X2 will be similar,

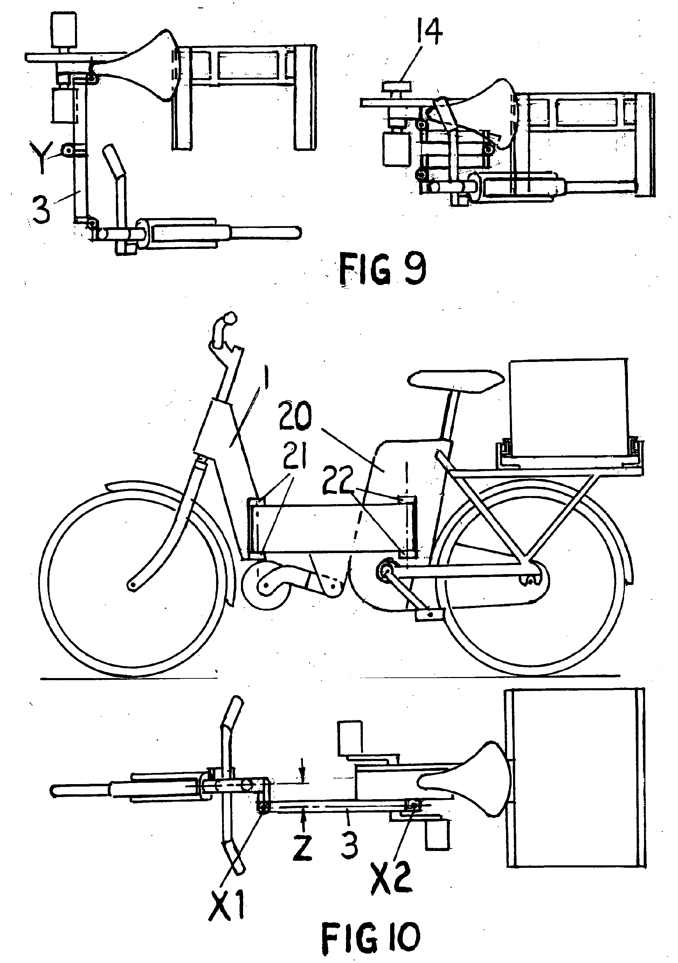

Fig 9 shows another version of the bicycle/trolley incorporating means of folding the trolley to permit it to be stowed away in a car boot. In this version the left-hand plan view of the trolley shows central frame member 3 made in two parts and provided with an additional hinge Y incorporating means of locking said hinge in the position shown. The castor assembly is not shown in this figure for clarity, and may be attached to either half of the central frame. Alternatively one castor may be provided for each half frame. The right-hand plan view shows the trolley folded. To fold the trolley the hinge Y is unlocked and the central frame parts folded forwards as far as possible. The right-hand pedal 14 is shown folded back towards the crank.

In Fig. 10 the hinge point centre lines X1 and X2 together with the centre line of the central frame are offset from the centre line of the wheels by an amount Y in order to accommodate a motor and battery unit 20. The front hinge pins are supported in brackets 21 rigidly mounted off the front frame member 1, and the rear hinge pins in brackets 22 rigidly mounted off the rear frame member 2 incorporating the motor/battery unit, all hinge pins engaging with pin bearings provided in the central frame member 3.

## Claims

1. A bicycle convertible into a shopping trolley **characterised in that** the frame supporting the wheels consists of three frame parts connected together by two hinged joints incorporating hinge pins, said frame parts consisting of a front frame supporting the steerable wheel, a rear frame supporting the driven wheel with associated drive system, chainwheel, guard, cranks, pedals, saddle and saddle pillar, and a central frame member incorporating a one or two castor wheels to support the bicycle when in the shopping mode or retracted upwards in the cycling mode, with said hinged joints incorporated into the ends of said frame parts such as to permit these to be rotated through an angle of 90 degrees relative to each other and locked into positions where the front and rear frame parts are either in line or parallel, said bicycle incorporating a removable shopping container supported on slide rails behind the saddle permitting said container to be locked in position either centrally over the rear wheel when in the cycling mode or centrally between the wheels when in the trolley mode, and incorporating a push bar enabling the bicycle to be pushed when in the shopping mode in the direction normally effected by pedalling the bicycle thus permitting the freewheel mechanism at the driving wheel to prevent rotation of the pedal cranks, and having a provision for the steering wheel to be locked in position in line with the front frame member in the shopping mode.

2. A bicycle as claimed in claim 1 **characterised in that** the push bar used to push the bicycle in the shopping mode is hinged off the shopping container or support frame and spring loaded such that extensions of the push bar provided with brake shoes engage the tyres when pressure on the push bar is released.

3. A bicycle as claimed in claims 1 and 2, **characterised in that** some or all of the cranks, pedals and handlebars can be folded to reduce the space taken up by the trolley in the shopping mode.

4. A bicycle as claimed in claims 1, 2, and 3, **characterised in that** a neutral gear is provided in the drive mechanism to permit the rear wheel to be rotated backwards in the shopping mode without effecting movement of the pedal cranks.

5. A bicycle as claimed in claims 1, 2, 3, 4, **characterised in that** the hinged brackets can move through an angle greater than 90 degrees, and that the central frame member incorporates a further vertical hinge along its length permitting the bicycle to be folded for transport after removal of the shopping container.

6. A bicycle as claimed in claims 1, 2, 3, 4, 5 and 6, **characterised in that** the central support member is offset from the centre line of the bicycle to make provision for an electric motor-assist drive unit and battery.
